# EUROPÄISCHE PATENTSCHRIFT

(11) **EP 1 253 338 B1**
(45) Veröffentlichungstag und Bekanntmachung des Hinweises auf die Patenterteilung: **28.09.2005**
(21) Anmeldenummer: 02002326.3
(22) Anmeldetag: 31.01.2002
(51) Int. Cl.: F16D 3/32

(54) **Zentriertes Doppelkreuzgelenk**
Centred double universal joint
Joint universel double centré

(30) Priorität: 26.04.2001 DE 10120432
(43) Veröffentlichungstag der Anmeldung: 30.10.2002
(73) Patentinhaber: GKN Walterscheid GmbH, 53797 Lohmar (DE)
(72) Erfinder: Hector, Martin, Dipl.-Ing., 53721 Siegburg (DE); Herchenbach, Paul, 53809 Ruppichteroth (DE)
(74) Vertreter: Harwardt, Günther

(56) Entgegenhaltungen:
- CH-A- 356 645
- FR-A- 818 717
- GB-A- 1 208 589
- US-A- 6 139 435

## Beschreibung

Die Erfindung betrifft ein zentriertes Doppelkreuzgelenk umfassend
- eine erste äußere Gelenkgabel mit ersten Gabelarmen und einer ersten Brücke, die die beiden ersten Gabelarme verbindet,
- eine erste innere Gelenkgabel, die einen ersten Lagergehäuseabschnitt aufweist,
- ein erstes Zapfenkreuz, das die erste äußere Gelenkgabel mit der ersten inneren Gelenkgabel gelenkig verbindet,
- eine zweite äußere Gelenkgabel mit zweiten Gabelarmen und mit einer zweiten Brücke, die die beiden zweiten Gabelarme verbindet,
- eine zweite innere Gelenkgabel, die einen zweiten Lagergehäuseabschnitt aufweist, der mit dem ersten Lagergehäuseabschnitt verbunden ist und mit diesem eine ringförmige Führungsausnehmung bildet,
- ein zweites Zapfenkreuz, das die zweite äußere Gelenkgabel mit der zweiten inneren Gelenkgabel gelenkig verbindet,
- eine Führungsscheibe mit einem zentralen Führungsansatz, der beidseitig von der Führungsscheibe vorragt, wobei die Führungsscheibe in der Führungsausnehmung verstellbar ist und
- eine Lagerkugel je äußere Gelenkgabel, die eine kugelige Außenfläche aufweist.

In der US 3 470 712 A ist ein zentriertes Doppelkreuzgelenk beschrieben, bei dem zwei äußere Gelenkgabeln jeweils über ein Zapfenkreuz mit zwei inneren Gelenkgabeln, die jeweils über einen Lagergehäuseabschnitt verfügen, gelenkig verbunden sind. Die Lagergehäuseabschnitte sind miteinander verschraubt und umgrenzen eine ringförmige Führungsausnehmung, in welcher eine Führungsscheibe unter Zwischenschaltung von schwimmend angeordneten ringförmigen Führungsplatten radial verschiebbar gelagert. Die Führungsscheibe weist zentral einen Führungsansatz auf, der beidseitig von der Führungsscheibe vorsteht. Dieser weist von seinen Stirnflächen ausgehend jeweils eine Bohrung auf, die ausgehend von der Stirnfläche zunächst zylindrisch und im Anschluß daran hohlkugelig ausgebildet sind. Die äußeren Gelenkgabeln, deren Gabelarme über eine eingeschweißte Brücke miteinander verbunden sind, besitzen jeweils einen eine Kugelfläche aufweisenden Zapfenansatz, der in die zugehörige Lagerbohrung des Führungsansatzes der Führungsscheibe eingreift. Bei hohen Drehmomenten und großen Abwinkelungen führt diese Ausbildung zu einer konzentrierten Belastung und damit zu einem höheren Verschleiß im Bereich des Kontaktes zwischen dem der Brücke zugeordneten Kugelzapfen und der entsprechenden zylindrischen Lagerbohrung, in welche er eingreift. Die vorbeschriebene Zentrierung dient dazu, dass die beiden dadurch verbundenen Kreuzgelenke jeweils auf den halben Beugewinkel zwischen einer Antriebswelle und einer Abtriebswelle gesteuert werden, um einen Gleichlauf zu erzeugen. Ergibt sich aufgrund Verschleiß ein Spiel, so sind diese Verhältnisse gestört.

Die FR-A-818 717 betrifft ein Doppelgelenk, das aus zwei sogenannten Faustgelenken aufgebaut ist, die durch eine Zentrierung miteinander verbunden sind. Jedes Faustgelenk umfasst einen einzelnen Lagerzapfen, der an beiden Enden Lagerstellen bildet und mit diesen in einem Gehäuse gelagert ist. Zwischen den beiden Lagerstellen ist der Lagerzapfen kugelig ausgebaucht. Der Lagerzapfen wird von einem faustförmigen Gelenkbauteil umschlossen, das auf einer Bohrung aufsitzt, in der der Lagerzapfen mit seiner kugeligen Ausbauchung sitzt. Die Enden des Lagerzapfens stehen über das Gelenkbauteil vor. Der Lagerzapfen ist mit dem Gelenkbauteil durch einen Bolzen verbunden, der quer durch den Lagerzapfen im Bereich der kugeligen Ausbauchung hindurch verläuft und in Querbohrungen des faustförmigen Gelenkbauteils sitzt, so dass der Lagerzapfen im Rahmen des Freiheitsgrades zwischen seiner Außenfläche und der Bohrung um den Bolzen schwenken kann. Das faustförmige Gelenkbauteil weist eine fest, d. h. einteilig an dieses angeschlossene Lagerkugel auf. Diese wird von einem Würfel umschlossen, der in einer entsprechend quadratisch gestalteten durchgehenden Lagerbohrung einer Führungsscheibe geführt ist. Diese Bauweise führt zu einer Begrenzung der Abwinkelungsfähigkeit und ist darüber hinaus schwierig herzustellen.

Der Erfindung liegt die Aufgabe zugrunde, ein zentriertes Doppelkreuzgelenk zu schaffen, bei dem eine exakte Steuerung der beiden das Doppelkreuzgelenk bildenden Kreuzgelenke auf den halben Beugewinkel über eine lange Lebensdauer gewährleistet ist.

Diese Aufgabe wird erfindungsgemäß dadurch gelöst,
dass die Brücken der äußeren Gelenkgabeln jeweils einen zylindrischen Lagerzapfen, nämlich einen ersten bzw. zweiten Lagerzapfen tragen,
dass die beiden Lagerzapfen von unterschiedlichen Enden in eine durchgehend zylindrische Lagerbohrung des Führungsansatzes hineinreichen,
dass jede Lagerkugel ein von den äußeren Gelenkgabeln getrenntes Bauteil ist und in Form einer Kugelschicht mit einer Durchgangsbohrung ausgebildet ist, mit der sie auf einem Lagerzapfen aufsitzt und zumindest axial bezüglich der Achse des Lagerzapfens unbeweglich gehalten ist und
dass für jede Lagerkugel ein Lagerring vorgesehen ist, der die kugelige Außenfläche der Lagerkugel in einer entsprechend hohlkugeligen Bohrung allseitig schwenkbeweglich lagert und mit der Lagerkugel bereits vor der Montage auf dem zugehörigen Lagerzapfen eine vormontierte Einheit bildet und der eine zylindrische Außenfläche aufweist, mit der er in der zylindrisch ausgebildeten Lagerbohrung der Führungsscheibe verstellbar einsitzt.

Von Vorteil bei dieser Ausbildung ist, dass zwischen der Lagerbohrung in der Führungsscheibe und dem Lagerring einerseits und dem Lagerring und der Lagerkugel andererseits ein flächiger Kontakt erzielt wird, so dass sich geringere Flächenpressungen ergeben und damit der Verschleiß deutlich verringert wird. Darüber hinaus besteht die Möglichkeit zumindest eines dieser Bauteile mit einer reibungsmindernden Beschichtung zu versehen oder einen günstigen Reibwert aufweisenden Werkstoff herzustellen. Die Lagerkugel und der Lagerring können als Baueinheit vormontiert sein und dann mit dem zugehörigen Lagerzapfen der äußeren Gelenkgabel verbunden werden. Abschließend kann die Montage der inneren Gelenkgabel mit dem Zapfenkreuz und der äußeren Gelenkgabel erfolgen. Diese Einheiten können dann mit der Führungsscheibe verbunden werden.

In Ausgestaltung der Erfindung ist vorgesehen, daß der Lagerring einstückig ausgebildet ist und die Lagerkugel in den Lagerring mit einer senkrechten Ausrichtung der Achse ihrer Durchgangsbohrung zu der Längsachse der zylindrischen Außenfläche des Lagerringes in die hohlkugelige Bohrung einpreßbar ist. Um eine möglichst große Abwinkelung des Gelenkes zu erzielen, ist vorgesehen, daß der Lagerring axial durch zwei Stirnflächen begrenzt ist und eine Längsachse aufweist, auf der die zylindrische Außenfläche zentriert ist und auf der die hohlkugelartige Bohrung axial außermittig zwischen den beiden Stirnflächen angeordnet ist. Diese Ausbildung hat auch den Vorteil, daß sich die Montage der Lagerkugel im Lagerring einfacher gestaltet, da zu einer Stirnseite hin sich eine vergrößerte Öffnung im Lagerring bezüglich der hohlkugeligen Bohrung ergibt.

Vorzugsweise sind die beiden Lagergehäuseabschnitte miteinander verschraubt, so daß sich eine lösbare Baueinheit ergibt und der Austausch von Bauteilen ermöglicht wird. Es ist jedoch auch möglich, nach der Montage die beiden Lagergehäuseabschnitte durch eine stoffschlüssige Verbindung miteinander zu verbinden, beispielsweise in Form eines wärmearmen Schweißverfahrens. Um eine möglichst große Abwinklung und den Verschleiß im Bereich der Lagerung der Führungsscheibe in der Führungsausnehmung gering zu halten, ist vorgesehen, daß beidseitig der Führungsscheibe ringförmige Führungsplatten in der ringförmigen Führungsausnehmung angeordnet sind und die Führungsausnehmung radial außen geschlossen und radial innen offen ist,
daß der Außendurchmesser der Führungsplatten größer als der innere Durchmesser der Führungsausnehmung und kleiner als der größte Durchmesser der Führungsausnehmung ist und daß der Innendurchmesser der Führungsplatten größer als der äußere Durchmesser des Führungsansatzes der Führungsscheibe und kleiner als der Außendurchmesser der Führungsscheibe ist.

Eine günstige Situation hinsichtlich der Festigkeit ergibt sich auch, wenn die Brücke einstückiger Bestandteil der zugehörigen äußeren Gelenkgabel ist.

Ein bevorzugtes Ausführungsbeispiel der Erfindung ist in der Zeichnung schematisch dargestellt.

Es zeigt
- Figur 1: eine Seitenansicht eines erfindungsgemäßen Doppelkreuzgelenkes, teilweise geschnitten, und
- Figur 2: das Detail z von Figur 1 im vergrößerten Maßstab.

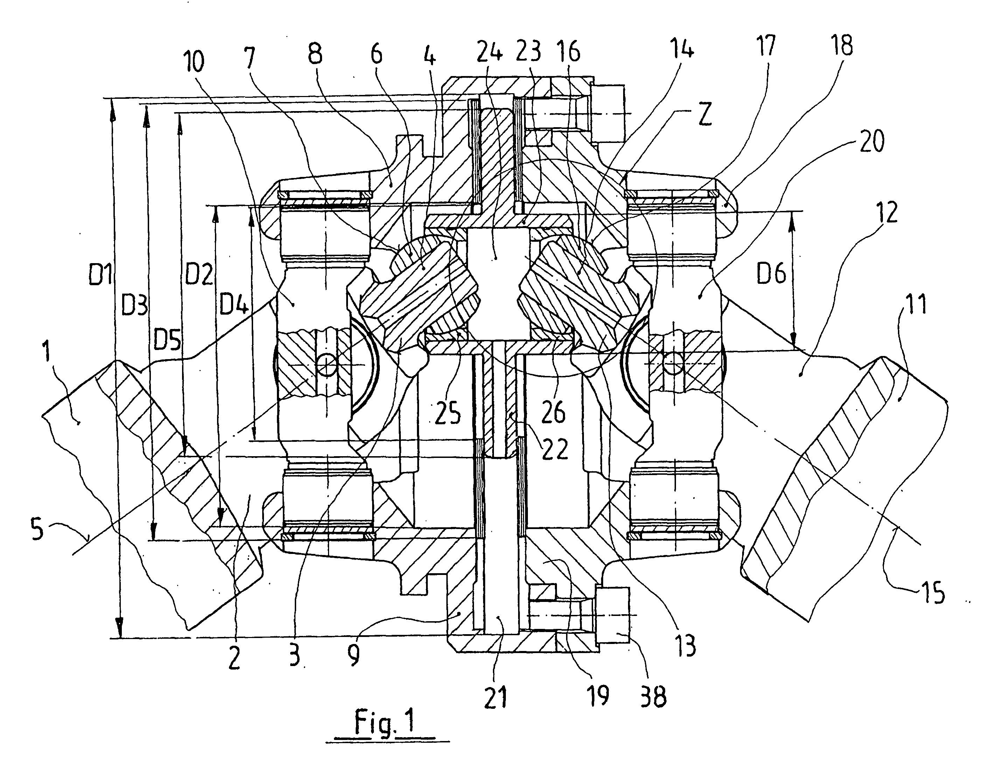

Aus Figur 1 ist ein Doppelkreuzgelenk ersichtlich, das aus zwei einzelnen Kreuzgelenken aufgebaut ist, die über einen Zentriermechanismus gemäß der Erfindung miteinander so verbunden sind, daß beide Gelenke jeweils den halben Beugewinkel bei Abwinklung einer Antriebswelle zu einer Abtriebswelle übernehmen, um damit einen Gleichlauf zu gewährleisten. Beide Einzelgelenke sind im wesentlichen gleich aufgebaut. Das Doppelkreuzgelenk gemäß Figur 1 umfasst eine erste äußere Gelenkgabel 1, die zwei erste Gabelarme 2 besitzt, die durch eine erste Brücke 3 an ihren freien Enden miteinander verbunden sind. Die erste Brücke 3 trägt einen ersten Lagerzapfen 4 mit der ersten Achse 5. Dieser ist auf seiner Außenfläche zylindrisch ausgestaltet. Dem ersten Lagerzapfen 4 ist eine erste Lagerkugel 6, die die Form einer Kugel schicht aufweist, entlang der ersten Achse 5 unverschieblich gehalten. Die kugelige Außenfläche der ersten Lagerkugel 6 ist mit 7 bezeichnet. Die erste äußere Gelenkgabel 1 ist mittels eines ersten Zapfenkreuzes 10 mit der ersten inneren Gelenkgabel 8 gelenkig verbunden. Die erste innere Gelenkgabel 8 ist mit ihren beiden Gabelarmen einstückig mit dem ersten Lagergehäuseabschnitt 9 ausgebildet.

Das zweite Gelenk umfasst die zweite äußere Gelenkgabel 11 die zwei zweite Gelenkarme 12 aufweist, von denen ebenfalls nur ein Gabelarm 12 sichtbar ist. Die beiden zweiten Gabelarmen 12 sind über eine zweite Brücke 13 miteinander verbunden. Diese zweite Brücke 13 trägt einen zweiten Lagerzapfen 14, der eine zylindrische Außenfläche aufweist und auf der zweiten Achse 15 zentriert ist. Auf dem zweiten Lagerzapfen 14 ist eine zweite Lagerkugel 16 axial entlang der zweiten Achse 15 unverschieblich gehalten. Sie besitzt die zweite kugelige Außenfläche 17. Die zweite äußere Gelenkgabel 11 ist mittels eines zweiten Zapfenkreuzes 20 mit den Gabelarmen der zweiten inneren Gelenkgabel 18 gelenkig verbunden, wobei diese ebenfalls einstückig mit einem zweiten Lagergehäuseabschnitt 19 ausgebildet ist.

Der erste Lagergehäuseabschnitt 9 und der zweite Lagergehäuseabschnitt 19 sind durch die Schrauben 38 lösbar miteinander verbunden. Die beiden Lagergehäuseabschnitte 9, 19 bilden zusammen eine radial außen geschlossene und radial innen offene ringförmige Führungsausnehmung 21, in welcher eine Führungsscheibe 22 zusammen mit beidseitig derselben angeordneten Führungsplatten 27 radial verstellbar aufgenommen ist. Die Durchmesser D1 bis D6 der beiden ringförmigen Führungsplatten 27 der Führungsscheibe 22 und der Führungsausnehmung 21 sind so aufeinander abgestimmt, daß die aufgrund der Abwinklung erforderliche Verstellung der Führungsscheibe 22 in der ringförmigen Führungsausnehmung 21 ausgeführt werden kann, andererseits jedoch diese sicher gehalten ist. Dementsprechend ist der Durchmesser D1 der Führungsausnehmung 21 größer als der Außendurchmesser D3 der beiden ringförmigen Führungsplatten 27 und größer als der Außendurchmesser D5 der Führungsscheibe 22. Der Innendurchmesser D4 der beiden ringförmigen Führungsplatten 27 ist jedoch kleiner als der Außendurchmesser D5 der Führungsscheibe 22. Die Führungsscheibe 22 weist des weiteren einen Führungsansatz 23 auf, in dem eine zylindrische Lagerbohrung 24 vorhanden ist. Der Führungsansatz 23 steht beidseitig über die ebenen Flächen der Führungsscheibe 22 vor. Aus diesem Grunde ist der kleinste Durchmesser D2 der ringförmigen Führungsausnehmung 21 größer als der Außendurchmesser D6 des Führungsansatzes 23. Ferner muß entsprechend auch der Innendurchmesser D4 der ringförmigen Führungsplatten 27 ebenfalls größer bemessen sein als der Außendurchmesser D6 des Führungsansatzes 23. Auf der ersten Lagerkugel 6 sitzt ein erster Lagerring 25, dessen hohlkugelige Bohrung an die kugelige Außenfläche 7 der ersten Lagerkugel 6 angepasst ist. Der erste Lagerring 25 ist außen zylindrisch gestaltet und in der Lagerbohrung 24 des Führungsansatzes 23 verschiebbar geführt. Entsprechend ist die zweite Lagerkugel 16 mit ihrer zweiten kugeligen Außenfläche 17 in einer entsprechenden hohlkugeligen Bohrung eines zweiten Lagerringes 26 aufgenommen. Der zweite Lagerring 26 ist ebenfalls in der Lagerbohrung 24 des Führungsansatzes 23 mit seiner zylindrischen Außenfläche verschiebbar aufgenommen.

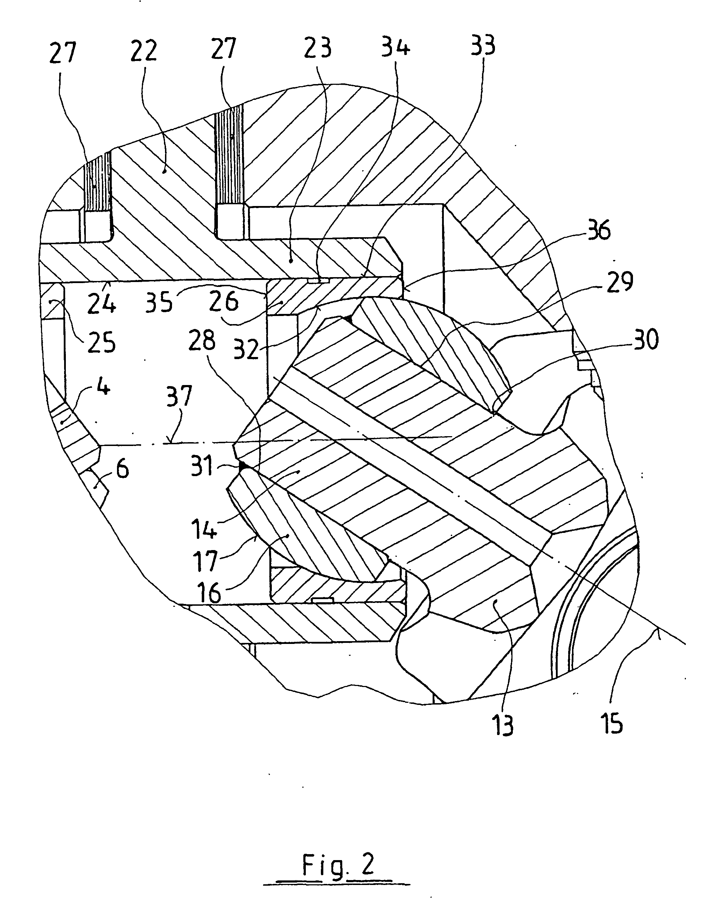

Aus Figur 2 ist im vergrößerten Maßstab die Anordnung der zweiten Lagerkugel 16 auf dem zweiten Lagerzapfen 14 erkennbar. Hierzu weist die zweite Lagerkugel 16 eine zylindrische Durchgangsbohrung 28 auf. Mit dieser ist der zweite Lagerring 26 auf der zylindrischen Sitzfläche 29, die durch die Außenfläche des zweiten Lagerzapfens 14 dargestellt ist, aufgenommen. Die zweite Lagerkugel 16 ist mit einer Stirnfläche gegen eine Schulter 30 des zweiten Lagerzapfens 14 anliegend gehalten. Sie wird durch eine oder mehrere auf dem Umfang des zweiten Lagerzapfens 14 im Bereich dessen Stirnfläche vorgesehene Verformungsstellen 31 die zu einer Materialanhäufung im Bereich der anderen Stirnfläche der zweiten Lagerkugel 16 führen in axialer Richtung entlang der Achse 15 am zweiten Lagerzapfen 14 festgelegt. Ferner ist bezüglich des zweiten Lagerringes 26 erkennbar, daß die hohlkugelige Bohrung 32 mit ihrem Zentrum auf der Längsachse 37 des zweiten Lagerringes 26 von der Stirnfläche 35 weg in Richtung zur Stirnfläche 36 versetzt angeordnet ist. Hieraus ergibt sich zur Stirnfläche 35 hin ein Bund, während im Bereich der Stirnfläche 36 die hohlkugelige Bohrung 32 mit einer kreisförmigen Öffnung endet. Hierdurch wird erreicht, daß im Bereich der Stirnfläche 36 eine genügend große Abwinklung gegenüber dem zweiten Lagerzapfen 14 und der zweiten Brücke 13 möglich ist, um den gewünschten großen Beugewinkel zu gewährleisten. Der zweite Lagerring 26 erhält durch den Bund nahe zur Stirnfläche 35 die notwendige Steifigkeit. In diesem Bereich steht genügend Freiraum zur Verfügung, so daß die zweite Lagerkugel 16 über die Stirnfläche 35 bei Abwinklung vorragen kann. Ferner ist erkennbar, daß der zweite Lagerring 26 eine zylindrische Außenfläche 33 aufweist, in der eine Nut 34 umlaufend angeordnet ist. Mit der zylindrischen Außenfläche 33 ist der zweite Lagerring 26 in der Lagerbohrung 24 des Führungsansatzes 23 verschiebbar gelagert. Die Längsachse 37, auf der das Zentrum der hohlkugeligen Bohrung 32 angeordnet ist, ist gleichzeitig auch die Achse, auf der die zylindrische Außenfläche 33 und damit die Lagerbohrung 24 zentriert ist.

Die Ausbildung und Anordnung der ersten Lagerkugel 6 und des ersten Lagerzapfens 4 entspricht der vorbeschriebenen Ausbildung im Zusammenhang mit der zweiten Lagerkugel 16 und dem zweiten Lagerzapfen 14.

### Bezugszeichenliste

- 1: erste äußere Gelenkgabel
- 2: erste Gabelarme
- 3: erste Brücke
- 4: erster Lagerzapfen
- 5: erste Achse
- 6: erste Lagerkugel
- 7: kugelige Außenfläche
- 8: erste innere Gelenkgabel
- 9: erster Lagergehäuseabschnitt
- 10: erstes Zapfenkreuz
- 11: zweite äußere Gelenkgabel
- 12: zweite Gabelarme
- 13: zweite Brücke
- 14: zweiter Lagerzapfen
- 15: zweite Achse
- 16: zweite Lagerkugel
- 17: zweite kugelige Außenfläche
- 18: zweite innere Gelenkgabel
- 19: zweiter Lagergehäuseabschnitt
- 20: zweites Zapfenkreuz
- 21: ringförmige Führungsausnehmung
- 22: Führungsscheibe
- 23: Führungsansatz
- 24: Lagerbohrung
- 25: erster Lagerring
- 26: zweiter Lagerring
- 27: Führungsplatte
- 28: Durchgangsbohrung
- 29: Sitzfläche
- 30: Schulter
- 31: Verformungsstelle
- 32: hohlkugelige Bohrung
- 33: zylindrische Außenfläche
- 34: Nut
- 35: Stirnfläche
- 36: Stirnfläche
- 37: Längsachse
- 38: Schraube

- D1: größter Durchmesser der Führungsausnehmung
- D2: innerer Durchmesser der Führungsausnehmung
- D3: Außendurchmesser der Führungsplatten
- D4: Innendurchmesser der Führungsplatten
- D5: Außendurchmesser der Führungsscheibe
- D6: äußerer Durchmesser des Führungsansatzes
- Z: Detail

## Patentansprüche

1. Zentriertes Doppelkreuzgelenk umfassend
- eine erste äußere Gelenkgabel (1) mit ersten Gabelarmen (2) und einer ersten Brücke (3), die die beiden ersten Gabelarme (2) verbindet,
- eine erste innere Gelenkgabel (8), die einen ersten Lagergehäuseabschnitt (9) aufweist,
- ein erstes Zapfenkreuz (10), das die erste äußere Gelenkgabel (1) mit der ersten inneren Gelenkgabel (8) gelenkig verbindet,
- eine zweite äußere Gelenkgabel (11) mit zweiten Gabelarmen (12) und mit einer zweiten Brücke (13), die die beiden zweiten Gabelarme (12) verbindet,
- eine zweite innere Gelenkgabel (18), die einen zweiten Lagergehäuseabschnitt (19) aufweist, der mit dem ersten Lagergehäuseabschnitt (9) verbunden ist und mit diesem eine ringförmige Führungsausnehmung (21) bildet,
- ein zweites Zapfenkreuz (20), das die zweite äußere Gelenkgabel (11) mit der zweiten inneren Gelenkgabel (18) gelenkig verbindet,
- eine Führungsscheibe (22) mit einem zentralen Führungsansatz (23), der beidseitig von der Führungsscheibe (22) vorragt, wobei die Führungsscheibe (22) in der Führungsausnehmung (21) verstellbar ist und
- eine Lagerkugel (6, 16) je äußere Gelenkgabel (1, 11), die eine kugelige Außenfläche (7, 17) aufweist,
**dadurch gekennzeichnet,**
**dass** die Brücken (3, 13) der äußeren Gelenkgabeln (1, 11) jeweils einen zylindrischen Lagerzapfen (4, 14), nämlich einen ersten bzw. zweiten Lagerzapfen (4, 14) tragen,
**dass** die beiden Lagerzapfen (4, 14) von unterschiedlichen Enden in eine durchgehend zylindrische Lagerbohrung (24) des Führungsansatzes (23) hineinreichen,
**dass** jede Lagerkugel (6, 16) ein von den äußeren Gelenkgabeln (1, 11) getrenntes Bauteil ist und in Form einer Kugelschicht mit einer Durchgangsbohrung (28) ausgebildet ist, mit der sie auf einem Lagerzapfen (4, 14) aufsitzt und zumindest axial bezüglich der Achse (5, 15) des Lagerzapfens (4, 14) unbeweglich gehalten ist und
**dass** für jede Lagerkugel (6, 16) ein Lagerring (25, 26) vorgesehen ist, der die kugelige Außenfläche (7, 17) der Lagerkugel (6, 16) in einer entsprechend hohlkugeligen Bohrung (32) allseitig schwenkbeweglich lagert und mit der Lagerkugel (6, 16) bereits vor der Montage auf dem zugehörigen Lagerzapfen (4, 14) eine vormontierte Einheit bildet und der eine zylindrische Außenfläche (33) aufweist, mit der er in der zylindrisch ausgebildeten Lagerbohrung (24) der Führungsscheibe (22) verstellbar einsitzt.

2. Zentriertes Doppelkreuzgelenk nach Anspruch 1,
**dadurch gekennzeichnet,**
**dass** der Lagerring (25, 26) einstückig ausgebildet ist und die Lagerkugel (6, 16) in den Lagerring (25, 26) mit einer senkrechten Ausrichtung der Achse (5, 15) ihrer Durchgangsbohrung (28) zu der Längsachse (37) der zylindrischen Außenfläche (33) des Lagerringes (26) in die hohlkugelige Bohrung (32) einpreßbar ist.

3. Zentriertes Doppelkreuzgelenk nach Anspruch 1,
**dadurch gekennzeichnet,**
**daß** der Lagerring (25, 26) axial durch zwei Stirnflächen (35, 36) begrenzt ist, und eine Längsachse (37) aufweist, auf der die zylindrische Außenfläche (33) zentriert ist und auf der die hohlkugelartige Bohrung (32) axial außermittig zwischen den beiden Stirnflächen (35, 36) angeordnet ist.

4. Zentriertes Doppelkreuzgelenk nach Anspruch 1,
**dadurch gekennzeichnet,**
**daß** die beiden Lagergehäuseabschnitte (9, 19) miteinander verschraubt sind.

5. Zentriertes Doppelkreuzgelenk nach Anspruch 1,
**dadurch gekennzeichnet,**
**daß** beidseitig der Führungsscheibe (22) ringförmige Führungsplatten (27) in der ringförmigen Führungsausnehmung (21) angeordnet sind und die Führungsausnehmung radial außen geschlossen und radial innen offen ist,
**daß** der Außendurchmesser (D3) der Führungsplatten (27) größer als der innere Durchmesser (D2) der Führungsausnehmung (21) und kleiner als der größte Durchmesser (D1) der Führungsausnehmung (21) ist und daß der Innendurchmesser (D4) der Führungsplatten (27) größer als der äußere Durchmesser (D6) des Führungsansatzes (23) der Führungsscheibe (22) und kleiner als der Außendurchmesser (D5) der Führungsscheibe (22) ist.

6. Zentriertes Doppelkreuzgelenk nach Anspruch 1,
**dadurch gekennzeichnet,**
**daß** die Brücke (3, 13) einstückiger Bestandteil der zugehörigen äußeren Gelenkgabel (1, 11) ist.

## Claims

1. Centred double universal joint comprising
- a first outer joint yoke (1), having first yoke arms (2) and a first bridge (3) connecting the two first yoke arms (2),
- a first inner joint yoke (8), having a first bearing housing portion (9),
- a first journal cross (10), which connects articulatably the first outer joint yoke (1) to the first inner joint yoke (8),
- a second outer joint yoke (11), having second yoke arms (12) and a second bridge (13) connecting the two second yoke arms (12),
- a second inner joint yoke (18), having a second bearing housing portion (19), connected to the first bearing housing portion (9), which forms together with the first bearing housing portion (9) an annular guide recess (21),
- a second journal cross (20), which connects articulatably the second outer joint yoke (11) to the second inner joint yoke (18),
- a guide disc (22), having a central guide projection (23), which projects from both sides of the guide disc (22), wherein the guide disc (22) is displaceable in the guide recess (21) and
- a bearing ball (6, 16) for each outer joint yoke (1, 11), which has a spherical outer face (7, 17),
**characterised in that**
the bridges (3, 13) of the outer joint yokes (1, 11), respectively, support one cylindrical bearing journal (4, 14), namely a first and a second bearing journal (4, 14), respectively, the two bearing journals (4, 14) project from different ends into a cylindrical bearing bore (24) of the guide projection (23) formed therethrough,
each bearing ball (6, 16) is a component separate from the outer joint yokes (1, 11) and is formed in form for a spherical layer with a through bore (28), with which it rests on a bearing journal (4, 14) and is held non-displaceably at least axially in relation to the axis (5, 15) of the bearing journal (4, 14) and
for each bearing ball (6, 16) a bearing ring (25, 26) is provided, which supports in a pivotable manner to all sides the sphercial outer face (7, 17) of the bearing ball (6, 16) in a corresponding hollow spherical bore (32) and with which the bearing ball (6, 16) forms already before the assembly on the corresponding bearing journal (4, 15) a pre-assembled unit and which has a cylindrical outer face (33), with which it rests in the cylindrically formed bearing bore (24) of the guide disc (22) in a displaceable manner.

2. Centred double universal joint according to claim 1,
**characterised in that**
the bearing ring (25, 26) is formed unitarily and that the bearing ball (6, 16) can be pressed into the bearing ring (25, 26) with a vertical alignment of the axis (5, 15) of its through bore (33) in relation to the longitudinal axis (27) of the cylindrical outer face (33) of the bearing ring (26) into the hollow spherical bore (32).

3. Centred double universal joint according to claim 1,
**characterised in that**
the bearing ring (25,2 6) is delimited axially by two end faces (35, 36) and has a longitudinal axis (37), on which the cylindrically outer face (33) is centred and on which the hollow spherical-like bore (32) is eccentrically arranged axially between the two end faces (35, 36).

4. Centred double universal joint according to claim 1,
**characterised in that**
the two bearing housing portions (9, 19) are bolted to one another.

5. Centred double universal joint according to claim 1,
**characterised in that**
at both sides of the guide disc (22) annular guide plates (27) are arranged in the annular guide recess (21) and that the guide recess is radially closed to the outside and radially open to the inside, and that
the outer diameter (D3) of the guide plates (27) is larger than the inner diameter (D2) of the guide recess (21) and smaller than the largest diameter (D1) of the guide recess (21) and that the inner diameter (D4) of the guide plates (27) is larger than the outer diameter (D6) of the guide projection (23) of the guide disc (22) and smaller than the outer diameter (D5) of the guide disc (22).

6. Centred double universal joint according to claim 1,
**characterised in that**
the bridge (3, 13) forms an integral part of the corresponding outer joint yoke (1, 11).

## Revendications

1. Joint universel double centré comprenant
- une première chape de joint extérieure (1) avec des premiers bras de chapes (2) et une première traverse (3) qui relie les deux premiers bras de chapes (2),
- une première chape de joint intérieure (8) qui comporte un premier tronçon de logement de palier (9),
- un premier croisillon de tourillon (10) qui relie de manière articulée la première chape de joint extérieure (1) à la première chape de joint intérieure (8),
- une deuxième chape de joint extérieure (11) avec des deuxièmes bras de chapes (12) et avec une deuxième traverse (13) qui relie les deux deuxièmes bras de chapes (12),
- une deuxième chape de joint intérieure (18) qui comporte un deuxième tronçon de logement de palier (19), qui est relié au premier tronçon de logement de palier (9) et qui forme avec celui-ci une encoche de guidage annulaire (21),
- un deuxième croisillon de tourillon (20) qui relie de manière articulée la deuxième chape de joint extérieure (11) à la deuxième chape de joint intérieure (18),
- une bague de guidage (22) avec un épaulement de guidage central (23) qui fait saillie des deux côtés de la bague de guidage (22), la bague de guidage (22) étant déplaçable dans l'encoche de guidage (21) et
- une bille de roulement (6, 16) pour chaque chape de joint extérieure (1, 11) qui comporte une face extérieure sphérique (7, 17),
**caractérisé en ce que**
les traverses (3, 13) des chapes de joint extérieures (1, 11) portent chacune un tourillon cylindrique (4, 14), c'est-à-dire un premier ou un deuxième tourillon (4, 14),
les deux tourillons (4, 14) pénètrent à partir d'extrémités différentes dans un alésage de palier cylindrique traversant (24) de l'épaulement de guidage (23),
chaque bille de roulement (6, 16) est un élément séparé des chapes de joint extérieures (1, 11) et est conçue sous forme d'un segment sphérique à deux bases avec un alésage débouchant (28) avec lequel elle s'appuie sur un tourillon (4, 14) et est maintenue immobile au moins axialement par rapport à l'axe (5, 15) du tourillon (4, 14) et
il est prévu pour chaque bille de roulement (6, 16) une bague de roulement (25, 26), dans laquelle la face extérieure sphérique (7, 17) des billes de roulement (6, 16) est logée dans un alésage (32) en forme de sphère creuse de manière à pivoter de tous les côtés, et qui forme avec la bille de roulement (6, 16), déjà avant le montage sur le tourillon correspondant (4, 14), une unité pré-montée et qui présente une face extérieure cylindrique (33) avec laquelle elle est placée de manière déplaçable dans l'alésage de palier cylindrique (24) de la bague de guidage (22).

2. Joint universel double centré selon la revendication 1,
**caractérisé en ce que**
la bague de roulement (25, 26) est conçue en une partie et la bille de roulement (6, 16) peut être pressée dans la bague de roulement (25, 26) avec une orientation perpendiculaire de l'axe (5, 15) de son alésage débouchant (28) par rapport à l'axe longitudinal (37) de la face extérieure cylindrique (33) de la bague de roulement (26) dans l'alésage (32) en forme de sphère creuse.

3. Joint universel double centré selon la revendication 1,
**caractérisé en ce que**
la bague de roulement (25, 26) est limitée axialement par deux faces frontales (35, 36) et comporte un axe longitudinal (37) par rapport auquel la face extérieure cylindrique (33) est centrée et sur lequel l'alésage (32) en forme de sphère creuse est placé axialement de manière excentrée entre les deux faces frontales (35, 36).

4. Joint universel double centré selon la revendication 1,
**caractérisé en ce que**
les deux tronçons de logement de palier (9, 19) sont vissés l'un avec l'autre.

5. Joint universel double centré selon la revendication 1,
**caractérisé en ce que**
des plaques de guidage annulaire (27) sont disposées dans l'encoche de guidage annulaire (21) des deux côtés de la bague de guidage (22) et l'encoche de guidage est fermée radialement vers l'extérieur et ouverte radialement vers l'intérieur,
le diamètre extérieur (D3) des plaques de guidage (27) est plus grand que le diamètre intérieur (D2) des encoches de guidage (21) et plus petit que le diamètre le plus grand (D1) de l'encoche de guidage (21) et le diamètre intérieur (D4) des plaques de guidage (27) est plus grand que le diamètre extérieur (D6) de l'épaulement de guidage (23) de la bague de guidage (22) et plus petit que le diamètre extérieur (D5) de la bague de guidage (22).

6. Joint universel double centré selon la revendication 1,
**caractérisé en ce que**
la traverse (3, 13) forme un composant en une partie de la chape de joint extérieure correspondante (1, 11).
